# EUROPÄISCHE PATENTANMELDUNG

(11) **EP 0 603 427 A1**
(43) Veröffentlichungstag der Anmeldung: **29.06.1994**
(21) Anmeldenummer: 92121893.9
(22) Anmeldetag: 23.12.1992
(51) Int. Cl.: F16F 9/02, A47C 3/30

(54) **Auslösemechanik**

(71) Anmelder: Ignaz Vogel GmbH & Co KG, Fahrzeugsitze, D-76228 Karlsruhe (DE)
(72) Erfinder: Vogel, Ignaz, W-7500 Karlsruhe 41-Stu. (DE)
(74) Vertreter: Trappenberg, Hans

(57) **Zusammenfassung**

Gas-Feststellfedern werden bei den verschiedensten Konstruktionen in immer größerem Maße eingesetzt. Schwierigkeiten bereitet hierbei die Betätigung des zentrisch in der Gasfeder vorgesehenen Auslösestiftes.

Nach der Erfindung werden diese Schwierigkeiten dadurch behoben, daß der Auslösestift über eine Hydraulikanordnung mit Schlauchleitung verschoben wird.

## Beschreibung

Die Erfindung betrifft eine Auslösemechanik für eine Gas-Feststellfeder, die mit einem zentrischen, in der Feder-Längsachse liegenden Auslösestift versehen ist, der entweder am Boden der Gasfeder oder an der Stirnseite ihrer Kolbenstange austritt.

Derartige Gas-Feststellfedern sind weit verbreitet. Einem großen Benutzerkreis sind sie beispielsweise bekannt zum Einstellen der Sitzhöhe oder der Rückenlehnenschräge bei entsprechend verstellbaren Sitzen, insbesondere bei Fahrgastsitzen. Gerade bei diesen Fahrgastsitzen, die üblicherweise als Doppel-Fahrgastsitze aufgebaut sind, wobei also zwei derartige Sitze nebeneinander auf einem Untergestell angeordnet sind, ergeben sich Schwierigkeiten bei der Unterbringung der Auslösemechanik. Diese Auslösemechanik wird üblicherweise durch einen in der Nähe der Gas-Feststellfeder gelagerten zweiarmigen Hebel gebildet, der zwar bei Einfachsitzen unterhalb der Sitzfläche leicht erreichbar angeordnet sein kann, dessen Anordnung jedoch bei den oben angeführten Doppel-Fahrgastsitzen, zumindest bei dem inneren Sitz, auf Schwierigkeiten stößt. Auch bei weiteren Anwendungsfällen bilden die Konstruktionsteile für diese Auslösemechanik stets Schwierigkeiten. Hierbei ist zu bedenken, daß die Lage der Gas-Feststellfeder im allgemeinen vorgegeben ist, daß aber die Betätigungshandhabe für die Auslösemechanik stets so angeordnet sein muß, daß sie nicht nur leicht erreichbar, sondern auch leicht, das heißt ohne großen Kraftaufwand, zu betätigen ist.

Damit stellt sich die Aufgabe, eine derartige Auslösemechanik für eine Gas-Feststellfeder anzugeben, die, ohne die sonstigen Konstruktionen zu stören, montiert werden kann so, daß die Lage der Gas-Feststellfeder freizügig und die Handhabe der Auslösemechanik im Handhabungsbereich ist und die außerdem nicht nur die Auslösung zuverlässig durchführen läßt, sondern auch wirtschaftlich herzustellen ist. Erreicht wird dies in erfindungsgemäßer Weise durch einen am Boden der Gasfeder oder am Kolbenstangenende zu befestigenden hydraulischen Arbeitszylinder, dessen Kolben unmittelbar auf den Auslösestift einwirkt, sowie einen über eine Schlauchleitung hydraulisch mit ihm verbundenen, einen Betätigungsstößel aufweisenden Betätigungszylinder.

Nicht mehr also wie bei den bekannten Konstruktionen werden mechanische Stellglieder vom Auslösestift der Gas-Feststellfeder zu einer Stelle geführt die im Handhabungsbereich liegt, sondern es wird eine hydraulische Verbindung zwischen diesen Teilen hergestellt, die selbstverständlich durch die Möglichkeit einer hydraulischen Schlauchverbindung in ihrer räumlichen Anordnung äußerst freizügig ist. Irgendwelche mechanischen Umlenkglieder werden bei der erfindungsgemäßen Auslösemechanik nicht mehr benötigt, womit auch die schwierigen mechanischen Bearbeitungsvorgänge entfallen. Hierbei kann der Betätigungsstößel, um Volumenänderungen des hydraulischen Mediums auszugleichen, in Betätigungsrichtung federbelastet sein. Es ist allerdings zu bemerken, daß die geringe, für eine solche erfindungsgemäße Auslösemechanik benötigte Menge an Hydrauliköl kaum zu einer merkbaren Volumenveränderung innerhalb der Auslösemechanik führt.

Der Forderung nach einer nur geringe Kräfte benötigenden Auslösemechanik kommt die erfindungsgemäße Ausführung entgegen, wonach der Kolben des Betätigungszylinders einen kleineren Durchmesser aufweisen soll als derjenige des Arbeitszylinders.

Insgesamt gesehen ergibt sich dadurch eine Auslösemechanik, die freizügig anzubringen und ohne große Krafteinwirkung zu betätigen sowie auch wirtschaftlich herzustellen und zu montieren ist.

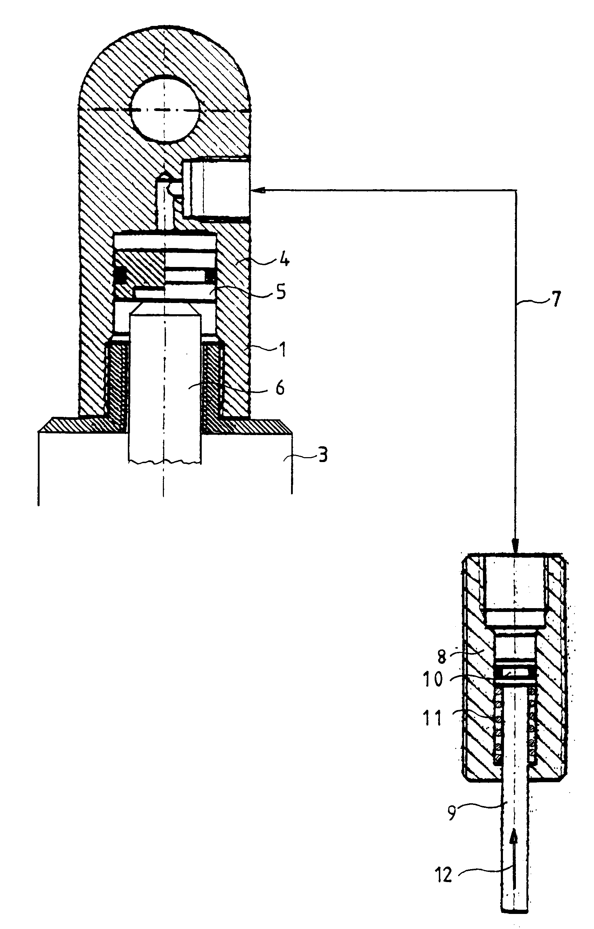

Auf der Zeichnung ist ein Ausführungsbeispiel des Erfindungsgegenstandes schematisch dargestellt.

Mittels einer Muffe (1) am Boden einer Gas-Feststellfeder (3) anschraubbar ist ein Arbeitszylinder (4) mit einem Kolben (5). Dieser Kolben (5) liegt unmittelbar auf einem Auslösestift (6) auf. Über eine Schlauchleitung (7) ist der Arbeitszylinder (4) mit einem Betätigungszylinder (8) verbunden, der einen mit einem Stößel (9) verbundenen Kolben (10) aufweist. Der Kolben (10) ist durch eine Feder (11) belastet, wodurch er stets in Kontakt mit dem hydraulischen Medium, also mit Hydrauliköl, steht. Dieser Stößel (9) kann direkt als Betätigungsgriff ausgebildet werden oder es können auch weitere Betätigungsorgane auf ihn einwirken.

Bei Druck auf diesen Betätigungsstößel (9) in Richtung des Pfeiles (12) wird der Kolben (5) des Arbeitszylinders (4) nach unten gedrückt und gleichzeitig, da der Kolben (5) auf dem Auslösestift (6) aufliegt, auch der Auslösestift (6) in die Gas-Feststellfeder (3) hinein verschoben. Dadurch wird das in der Gas-Feststellfeder (3) befindliche Ventil geöffnet, so daß dessen Kolbenstange in Längsrichtung verschoben werden kann. Nach Loslassen des Stößels (9) drückt die auf den Auslösestift (6) innerhalb der Gas-Feststellfeder (3) befindliche Feder den Kolben (5) und damit auch den Kolben (10) wieder in die vorherige ursprüngliche Lage zurück, wobei gleichzeitig auch wieder die Ventile in der Gas-Feststellfeder (3) geschlossen werden.

## Patentansprüche

1. Auslösemechanik für eine Gas-Feststellfeder, die mit einem zentrischen, in der Feder-Längsachse liegenden Auslösestift versehen ist, der entweder am Boden der Gasfeder oder an der Stirnseite ihrer Kolbenstange austritt,
gekennzeichnet
durch einen am Boden der Gasfeder oder am Kolbenstangenende zu befestigenden hydraulischen Arbeitszylinder (3), dessen Kolben (5) unmittelbar auf den Auslösestift (6) einwirkt sowie einen über eine Schlauchleitung (7) hydraulisch mit ihm verbundenen, einen Betätigungsstößel (9) aufweisenden Betätigungszylinder (8).

2. Auslösemechanik nach Anspruch 1,
dadurch gekennzeichnet,
daß der Betätigungsstößel (9) in Betätigungsrichtung (12) federbelastet (11) ist.

3. Auslösemechanik nach Anspruch 1 oder 2,
dadurch gekennzeichnet,
daß der Kolben (10) des Betätigungszylinders (8) einen kleineren Durchmesser aufweist als derjenige des Arbeitszylinders (4).
